# EUROPÄISCHE PATENTANMELDUNG

(11) **EP 1 788 484 A2**
(43) Veröffentlichungstag der Anmeldung: **23.05.2007**
(21) Anmeldenummer: 06124270.7
(22) Anmeldetag: 17.11.2006
(51) Int. Cl.: G06F 11/267

(54) **Verfahren und Vorrichtung zur Diagnose eines Bussystems mit einer Anzahl von Busteilnehmern**

(30) Priorität: 21.11.2005 DE 102005055429
(71) Anmelder: SIEMENS AKTIENGESELLSCHAFT, 80333 München (DE)
(72) Erfinder: Eberhardt, Michael, 55218 Ingelheim (DE)

(57) **Zusammenfassung**

Die Erfindung betrifft ein Verfahren zur Diagnose eines Bussystems (4) mit einer Anzahl von Busteilnehmern (T1 bis Tn), wobei eine portable Diagnoseeinrichtung (6) als ein separater Busteilnehmer (T1 bis Tn) über eine Steckverbindung an einer vorgebbaren Position an das Bussystem (4) angeschlossen wird und mittels einer Protokollanalysefunktion der portablen Diagnoseeinrichtung (6) mindestens ein physikalischer Parameter und ein logischer Parameter überwacht und gegebenenfalls analysiert werden.

## Beschreibung

Die Erfindung bezieht sich auf ein Verfahren zur Diagnose eines Bussystems mit einer Anzahl von Busteilnehmern, insbesondere zur Leitungsdiagnose des Bussystems. Des Weiteren bezieht sich die Erfindung auf eine Vorrichtung zur Durchführung des Verfahrens.

Bei einem Bussystem mit mehreren Busteilnehmern handelt es sich beispielsweise um ein Feldbussystem, insbesondere einen so genannten Profibus, der mehrere Automatisierungsgeräte miteinander verbindet und über den Daten übertragen, insbesondere zwischen den Automatisierungsgeräten ausgetauscht werden. Die Automatisierungsgeräte dienen dabei der Steuerung, Regelung sowie Bedienung und Beobachtung einer technischen Anlage, z. B. einer Kraftwerksanlage, einer chemischen Anlage und deren Anlagenprozesses. In einem Störungsfall ist es von großer Bedeutung, schnell die Störungsursache zu erkennen und zu beheben, um Stillstandszeiten der technischen Anlage zu minimieren oder zu vermeiden.

Zur Störfallerkennung sind verschiedene Diagnosesysteme bekannt. Zur Lokalisierung und Behebung von Fehlern im Bussystem sind beispielsweise so genannte Diagnoserepeater bekannt, welche auf dem Prinzip der Reflexionsmessung einen Leitungsfehler oder eine Störstelle entlang des Bussystems, d. h. der Busleitung, identifizieren. Dabei wirkt sich der Leitungsfehler oder die Störstelle entlang der Busleitung durch eine lokale Änderung des Wellenwiderstands aus und reflektiert daher einen Impuls oder ein Signal. So wird der Wellenwiderstand z. B. bei einem Kurzschluss niederohmig und bei einer Unterbrechung hochohmig. Aus der Zeitspanne zwischen dem Aussenden eines Impulses bzw. eines Signals und dem Eintreffen der Reflexion lässt sich die Entfernung eines Leitungsfehlers bzw. einer Störstelle ermitteln. Darüber hinaus können aus der Polarität der Reflexion Aussagen über die Ursache des Leitungsfehlers abgeleitet werden. Ein Leitungsfehler im Bussystem wird somit anhand von physikalischen Parametern der Leitung ermittelt. Ein derartiges Diagnosesystem zur Ermittlung von Leitungsfehlern ist beispielsweise aus der DE 100 48 741 C1 bekannt.

Darüber hinaus kann es bei der Datenübertragung zu Datenfehlern, d. h. zu einer fehlerhaften Datenübertragung beispielsweise durch eine unvollständige Übertragung eines Datentelegramms, kommen. Zur Diagnose der Datenübertragung ist ein weiteres Diagnosesystem bekannt, welches anhand von logischen Parametern die Datenübertragung über das Bussystem auf Fehler, z. B. auf einen Datentelegrammfehler, überwacht. Hierbei werden die übertragenen Daten beispielsweise anhand von vorgegebenen Daten für das betreffende übertragende Datentelegramm auf Vollständigkeit und Richtigkeit überprüft. Hierzu ist ein üblicherweise auf Software basierendes Diagnosesystem bekannt, das beispielsweise in einem der Automatisierungsgeräte integriert ist.

Nachteilig dabei ist, dass beide Diagnosesysteme - das Leitungs-Diagnosesystem und das Datenübertragungs-Diagnosesystem - unabhängig voneinander sind. Üblicherweise sind diese separat ausgebildet. So wird lediglich ein Datenübertragungsfehler identifiziert, dessen Ursache wird nicht identifiziert.

Der Erfindung liegt daher die Aufgabe zugrunde, ein gegenüber dem Stand der Technik verbessertes Verfahren zur Diagnose eines Bussystems mit einer Anzahl von Busteilnehmern anzugeben. Darüber hinaus ist eine besonders geeignete Vorrichtung zur Diagnose eines Bussystems anzugeben.

Die erstgenannte Aufgabe wird erfindungsgemäß gelöst durch den Gegenstand des Anspruchs 1. Hinsichtlich des Verfahrens wird die Aufgabe gelöst durch die Merkmale des Anspruchs 11.

Vorteilhafte Weiterbildungen der Erfindung sind Gegenstand der Unteransprüche.

Die Erfindung geht dabei von der Überlegung aus, dass Daten-übertragungsfehler häufig auf Fehler im Bussystem zurückzuführen sind. Daher sollten das Leitungs-Diagnosesystem und das Datenübertragungs-Diagnosesystem kombiniert werden. Hierzu ist ein Verfahren zur Diagnose eines Bussystems vorgesehen, bei dem eine portable Diagnoseeinrichtung als ein separater Busteilnehmer über eine Steckverbindung an einer vorgebbaren Position an das Bussystem angeschlossen wird und mittels einer Protokollanalysefunktion der portablen Diagnoseeinrichtung mindestens ein physikalischer Parameter und ein logischer Parameter überwacht und gegebenenfalls analysiert werden. Anhand von logischen Parametern werden dabei Ereignisse bei der Datenübertragung (= Softwarefehler) und anhand von physikalischen Parametern Ereignisse im Bussystem (= Hardwarefehler) bestimmt und auf Fehler überwacht.

Vorzugsweise werden anhand des physikalischen Parameters ein Leitungsfehler, insbesondere ein Leitungsbruch, ein Kurzschluss einer der Signalleitungen, ein Fehlende des Bussystems, ein fehlerhafter Busabschlusswiderstand bestimmt. Hierbei wird das aus dem Stand der Technik bekannte Prinzip der Reflexionsmessung eingesetzt. Anhand des logischen Parameters wird zweckmäßigerweise die Datenübertragung überwacht, insbesondere ein Telegrammfehler, ein Datenfehler, ein fehlerhafter Ein- und/oder Ausgang bestimmt. Hierbei wird ein in der portablen Diagnoseeinrichtung integriertes Softwaremodul, welches die Protokollanalysefunktion für beide zu analysierenden Parameter umfasst, verwendet.

In einer bevorzugten Ausführungsform werden der physikalische Parameter und der logische Parameter auf einen Wirkzusammenhang überprüft. So wird beispielsweise eine elektromagnetische Störung des Bussystems und eine daraus resultierende fehlerhafte Datenübertragung automatisch mittels der Protokollanalysefunktion identifiziert und die Datenübertragung wiederholt, d. h. das oder die betreffenden Datentelegramme werden nochmals gesendet.

In einer Weiterbildung umfasst die portable Diagnoseeinrichtung mindestens einen Diagnoserepeater, mittels dessen der physikalische Parameter bestimmt wird. Je nach Aufbau und Umfang des Bussystems können auch mehrere Diagnoserepeater vorgesehen sein, die jeweils ein oder mehrere physikalische Parameter, z. B. den Wellenwiderstand, die Laufzeit eines Signals, im jeweils zugehörigen Leitungsabschnitt des Bussystems bestimmen.

Zweckmäßigerweise umfasst die portable Diagnoseeinrichtung mindestens eine zentrale Datenverarbeitungseinheit, mittels der der logische Parameter bestimmt wird. Das heißt, Überwachungsfunktionen der Datenübertragung, die üblicherweise in einem der Automatisierungsgeräte integriert sind, werden als ein Softwaremodul mit der Protokollanalysefunktion in der portablen Diagnoseeinrichtung integriert. Somit dient die portable Diagnoseeinrichtung als ein universelles Diagnosesystem der kombinierten Überwachung von Bussystem und Datenübertragung. Durch die Integration des Diagnoserepeaters kann die zentrale Datenverarbeitungseinheit der portablen Diagnoseeinrichtung den oder die Diagnoserepeater parametrieren.

Zur Visualisierung der Ergebnisse der kombinierten Diagnose anhand der physikalischen und der logischen Parameter der Datenübertragung wird die portable Diagnoseeinrichtung mit einem Busteilnehmer, insbesondere mit einer Leiteinheit der Automatisierungsgeräte, verbunden. Dabei werden sowohl die Daten des die Datenübertragung repräsentierenden logischen Parameters als auch die Daten des die Busleitung repräsentierenden physikalischen Parameters gemeinsam oder getrennt ausgegeben und gegebenenfalls dargestellt.

Für eine Analyse der Fehler bei der Datenübertragung sowie zur Archivierung und Protokollierung der Datenübertragung werden der physikalische Parameter und/oder der logische Parameter in einem Speicher der portablen Diagnoseeinrichtung und/oder in einem Speicher eines anderen Busteilnehmers und/oder in einem Speicher einer der Diagnoserepeater hinterlegt.

Bei der Vorrichtung zur Diagnose eines Bussystems mit einer Anzahl von Busteilnehmern ist die portable Diagnoseeinrichtung als ein separater Busteilnehmer über eine Steckverbindung an einer vorgebbaren Position an das Bussystem anschließbar. Zur Diagnose des Bussystems und der Datenübertragung umfasst die Diagnoseeinrichtung eine Protokollanalysefunktion, die mindestens einen physikalischen Parameter und einen logischen Parameter des Bussystems überwacht und gegebenenfalls auf Abhängigkeiten prüft und analysiert. Für eine möglichst flexible Ausführung der portablen Diagnoseeinrichtung weist diese eine separate Stromversorgung auf.

Die mit der Erfindung erzielten Vorteile bestehen insbesondere darin, dass mittels einer portablen Diagnoseeinrichtung, welche einen integrierten Diagnoserepeater und eine Protokollanalysefunktion als ein Softwaremodul umfasst, eine kombinierte Überwachung und Diagnose des Bussystems auf Hardware- und Softwarefehler ermöglicht ist. Dabei werden sowohl physikalische Parameter als auch logische Parameter der Datenübertragungsstrecke, d. h. der Busleitung, bzw. der Datenübertragung mittels der Protokollanalysefunktion unter einer Oberfläche bestimmt, analysiert und gespeichert. Ein Wechseln zwischen mehreren bekannten Werkzeugen, wie z. B. zwischen mehreren Diagnoserepeatern und Softwareapplikationen in Automatisierungsgeräten, entfällt. Die portable Diagnoseeinrichtung ist als ein separater Busteilnehmer an eine beliebige Stelle im Bussystem anschließbar. Hierzu umfasst die portable Diagnoseeinrichtung zugehörige Standardschnittstellen, insbesondere Steckanschlüsse. Die in der portablen Diagnoseeinrichtung integrierten Diagnoserepeater weisen ebenfalls zugehörige Busanschlüsse auf.

Ein Ausführungsbeispiel der Erfindung wird anhand einer Zeichnung näher erläutert. Darin zeigt:

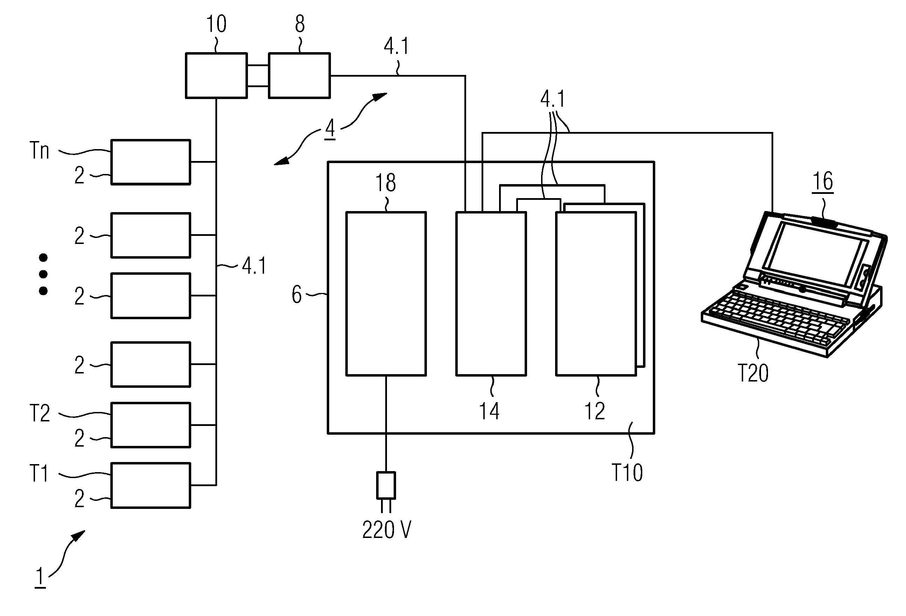

- FIG 1: eine detaillierte Darstellung einer Vorrichtung zur Diagnose eines Bussystems mit einer portablen Diagnoseinrichtung.

Die FIG 1 zeigt ein Automatisierungssystem 1 mit mehreren Automatisierungsgeräten 2, die als Busteilnehmer T1 bis Tn über ein Bussystem 4 miteinander verbunden sind. Dabei kommunizieren die Busteilnehmer T1 bis Tn über das Bussystem 4 miteinander und tauschen Daten in Form von Datentelegrammen aus. Bei dem Automatisierungssystem 1 kann es sich beispielsweise um eine automatische Steuerung eines Kraftwerksprozesses oder eines Prozesses einer anderen technischen Anlage, z. B. einer chemischen Anlage, handeln.

Zur Diagnose des Bussystems 4, d. h. der Datenübertragung und der Busleitung, ist eine portable Diagnoseeinrichtung 6 vorgesehen. Die portable Diagnoseeinrichtung 6 ist ein separater Busteilnehmer T10 und über eine Steckverbindung, d. h. über eine zugehörigen Prüfstecker 8 in einen Busstecker 10 des Bussystems 4, gesteckt und mit diesem verbunden.

Zur Diagnose der Busleitung des Bussystems 4 anhand von physikalischen Parametern, wie z. B. der Änderung des Wellenwiderstands, Laufzeit eines Messsignals, umfasst die portable Diagnoseeinrichtung 6 ein oder mehrere Diagnoserepeater 12. Die Diagnoserepeater 12 sind über eine Busleitung 4.1 mit einer zentralen Datenverarbeitungseinheit 14 (auch kurz CPU, "Central Processing Unit" genannt) der portablen Diagnoseeinrichtung 6 verbunden.

Die zentrale Datenverarbeitungseinheit 14 umfasst ein Softwaremodul mit einer Protokollanalysefunktion zur Diagnose der Datenübertragung, d. h. der übertragenen Daten anhand von logischen Parametern, wie z. B. Änderung von übertragenen Daten, d. h. von gesendeten und empfangenen Daten, hinsichtlich Dateninhalt und Datenmenge. Darüber hinaus werden mittels des Softwaremoduls die mittels des Diagnoserepeaters 12 ermittelten physikalischen Parameter, Daten und Fehler bestimmt, analysiert und auf Abhängigkeiten mit den logischen Parametern überprüft und gegebenenfalls ausgegeben.

Die Ergebnisse der Protokollanalyse können dabei auf einer zugehörigen, nicht näher dargestellten Anzeigeeinrichtung der portablen Diagnoseeinrichtung 6 und/oder einem anderen Ausgabegerät, z. B. einem Personalcomputer 16, der über das Bussystem 4 mit der portablen Diagnoseeinrichtung 6 verbunden ist, ausgegeben und angezeigt werden. Der Personalcomputer 16 ist ein separater Busteilnehmer T20.

Für eine autarke Versorgung der portablen Diagnoseeinrichtung 6 umfasst diese eine zugehörige Stromversorgung 18, z. B. eine Batterie, oder ein Netzteil mit einem 220-V-Anschluss.

Nachfolgend werden der Betrieb und die Funktion der portablen Diagnoseeinrichtung 6 näher beschrieben.

Die portable Diagnoseeinrichtung 6 dient zur Fehlersuche sporadischer Fehler im laufenden Betrieb des Bussystems 4 und des Automatisierungssystems 1. Hierzu wird die portable Diagnoseeinrichtung 6 an das Bussystem 4 über eine Steckverbindung angeschlossen. Um einen möglichst kurzen Anlagenstillstand beim Anschluss der portablen Diagnoseeinrichtung 6 an das Bussystem 4 zu erzielen, werden vor dem Anschluss die für die Diagnoseeinrichtung 6 als Busteilnehmer T20 betreffenden Busparameter, wie z. B. Baudrate, Busadresse und Busprofil, geprüft und eingestellt. Insbesondere werden freie Adressen des Bussystems 4 für die Diagnoseeinrichtung 6 eingestellt. Hierzu umfasst das Softwaremodul der Diagnoseeinrichtung 6 ein entsprechendes Eingabemodul, mit welchem die Busparameter eingegeben werden. Sind freie oder vorgegebene Busparameter nicht bekannt, so können diese automatisch über die Steckverbindung zum Bussystem 4 und somit über die Busschnittstelle von einem als Programmiergerät angeschlossenen Personalcomputer 16 konfiguriert und eingestellt werden.

Zur Inbetriebnahme der portablen Diagnoseeinrichtung 6 wird das Automatisierungssystem 1 in einen betriebssicheren Zustand gefahren. Beispielsweise wird das Automatisierungssystem stillgesetzt, um zu vermeiden, dass einige oder alle Busteilnehmer T1 bis Tn vorübergehend in Störung gehen.

Anschließend wird der Prüfstecker 8 der portablen Diagnoseeinrichtung 6 in den Busstecker 10 des Bussystems 4 eingesteckt. Bevorzugt erfolgt dies an einer Stelle, dass der zu prüfende Teil des Bussystems 4, d. h. der betreffende Abschnitt der Busleitung 4.1, sich auf der Buchsenseite und somit auf der Seite des Prüfsteckers 8 befindet. Sollte der Prüfstecker 8 mit einem nicht näher dargestellten Abschlusswiderstand versehen sein, so ist dieser zu deaktivieren.

Nach erfolgtem Anschluss der portablen Diagnoseeinrichtung 6 an das Bussystem 4 wird der 220-V-Anschluss gesteckt und die Diagnoseeinrichtung 6 eingeschaltet. Die zentrale Datenverarbeitungseinheit 14 der Diagnoseeinrichtung 6 startet und initialisiert ein oder mehrere Diagnoserepeater 12, die an die zentrale Datenverarbeitungseinheit 14 über eine Busleitung 4.1 angeschlossen sind. Gegebenenfalls kann ein zur Auswertung und Analyse vorgesehener Personalcomputer 16 direkt an einen der Diagnoserepeater 12 oder über eine Busleitung 4.1 an die zentrale Datenverarbeitungseinheit 14 der Diagnoseeinrichtung 6 angeschlossen werden.

Mittels der portablen Diagnoseeinrichtung 6 werden nun die Busleitungen 4.1 des Bussystems 4 kontinuierlich überwacht. Dazu sind ein oder mehrere Diagnoserepeater 12 über eine Busleitung 4.1 mit dem Bussystem 4 verbunden. Wird mittels der Protokollanalysefunktion ein Busfehler identifiziert, so wird die Leitungsüberwachung abgebrochen und der Busfehler anhand der ermittelten physikalischen Parameter diagnostiziert.

Dies erfolgt in herkömmlicher Art und Weise auf dem Prinzip der Reflexionsmessung, indem mindestens ein physikalischer Parameter der Busleitung 4.1 bestimmt wird. Zur Erkennung der Störstelle oder des Leitungsfehlers auf der Busleitung 4.1, d. h. auf dessen Leitungen A und/oder B bei einer ZweidrahtLeitung, sendet der Diagnoserepeater 12 ein Messsignal S in die Busleitung 4.1. Bei der Reflexionsmessung wird ein vom Diagnoserepeater gesendetes Datentelegramm als initiierendes Messsignal verwendet. Dies bedeutet, dass sowohl die vom Bussystem 4 umfassenden passiven Busteilnehmer T1 bis Tn, d. h. diejenigen Busteilnehmer T1 bis Tn, die zunächst Datentelegramme oder Nutzsignale lediglich empfangen und erst dann auch selbst senden, als auch die aktiven Busteilnehmer T1 bis Tn, die von sich aus Datentelegramme senden können, praktisch durch das Messverfahren nicht beeinflusst werden. Dadurch bleibt der Busbetrieb durch das Messverfahren ungestört. Vielmehr wird das oder jedes Datentelegramm - und somit das Nutzsignal selbst - als Messsignal verwendet. Dieses Verfahren ist beispielsweise aus der DE 100 48 741 C1 bekannt.

Anhand des vom Diagnoserepeater 12 ausgesendeten Messsignals, welches kontinuierlich, ereignisgesteuert oder zyklisch ausgesendet wird, wird als physikalischer Parameter des Bussystems 4 zum einen die Entfernung, beispielsweise in Metern zwischen dem Diagnoserepeater 12 und dem jeweiligen Busteilnehmer T1 bis Tn, ermittelt, indem die Zeitspanne zwischen dem Senden des Messsignals und dem Eintreffen des Reflexionssignals ermittelt wird. Durch Ermittlung der lokalen Änderung des Wellenwiderstands kann die Art der Störung oder des Fehlers in der Busleitung 4.1 ermittelt werden. So wird der Wellenwiderstand bei einem Kurzschluss niederohmig und bei einer Unterbrechung hochohmig. Auch kann ein fehlender Busabschlusswiderstand identifiziert oder andere sporadische Fehler, z. B. ein Wackelkontakt am Abschlusswiderstand, ermittelt werden. Darüber hinaus kann die Bustopologie bestimmt und gespeichert werden.

Somit können im Fehlerfall sowohl die Art des Fehlers, die Entfernung und die Adresse des nächstgelegenen Busteilnehmers T1 bis Tn ermittelt und ausgegeben werden. Zur Analyse und Behebung des Fehlers werden die ermittelten physikalischen Parameter und die Fehlerdaten, wie Art, Entfernung und Adresse des nächstgelegenen Busteilnehmers, in einem nicht näher dargestellten Speicher der portablen Diagnoseeinrichtung 6 hinterlegt. Auch können die Fehlerdaten an einen anderen Busteilnehmer T1 bis Tn, insbesondere an den Personalcomputer 16, zur Analyse und Ausgabe, z. B. an eine Servicestelle, gesendet werden. Somit stehen die Fehlerdaten bei Eintreffen des Servicepersonals zur Verfügung.

Darüber hinaus kann zu dem aus dem physikalischen Parameter abgeleiteten Busleitungsfehler anhand des Busleitungsfehlers selbst und/oder zusätzlich anhand von logischen Parametern mittels der Protokollanalysefunktion ein Datenübertragungsfehler bestimmt werden. Hierbei werden zusätzlich zur Überwachung der physikalischen Parameter die logischen Parameter der Datenübertragung, insbesondere Dateninhalt und Datenmenge der übertragenen Daten auf Richtigkeit und/oder Veränderungen überwacht. Beispielsweise werden bei einem identifizierten Busleitungsfehler aufgrund einer elektromagnetischen Störung allein anhand dieses identifizierten physikalischen Parameters die während dieser Zeit übertragenen Daten als fehlerbehaftet bestimmt und erneut gesendet und übertragen. Zusätzlich können die übertragenen Daten auf Richtigkeit und Vollständigkeit überprüft werden, so dass der aufgrund von physikalischen Parametern identifizierte Übertragungsfehler anhand von logischen Parametern überprüft und bestätigt wird.

Nach Behebung des Fehlers - Software- und/oder Hardwarefehler - kann die portable Diagnoseeinrichtung 6 wieder entfernt werden und an einer anderen Stelle im Bussystem 4 oder für ein anderes Automatisierungssystem 1 verwendet werden.

Zusammenfassend kann die portable Diagnoseeinrichtung 6 insbesondere Busleitungen 4.1 aus Kupfer auf Fehler überwachen.

Lichtwellenleiter können hiermit nicht diagnostiziert werden. Je nach Aufbau der Diagnoseeinrichtung 6 - ein oder mehrere Diagnoserepeater 12 - kann als maximal diagnostizierbare Leitungslänge ein Leitungssegment von 100 m Länge diagnostiziert werden. Ist die betreffende Busleitung 4.1 länger als 100 m so kann die Diagnoseeinrichtung 6 am Ende eingebaut werden oder es wird ein zusätzlicher Diagnoserepeater 12 eingesetzt.

Die portable Diagnoseeinrichtung 6 dient der Diagnose des Bussystems 4; außerhalb des Bussystems 4 auftretende Fehler werden nicht identifiziert. Fällt beispielsweise ein Busteilnehmer T1 bis Tn aufgrund einer Sicherung aus, so wird dieser selbst fehlerhafte Busteilnehmer T1 bis Tn nicht als Fehler identifiziert, da das Bussystem 4 nicht beeinträchtigt ist. Gleiches gilt für falsch parametrierte Busteilnehmer T1 bis Tn, wenn diese hierdurch nicht die Datenübertragung stören.

Die portable Diagnoseeinrichtung 6 ist ein eigenständiger Busteilnehmer T10, der als ein Master in das Bussystem 4 eingebunden wird. Somit ist ein Multimaster-Bussystem gegeben.

Die Erfindung ist nicht auf die Ausführungsbeispiele beschränkt, sondern im Rahmen der Offenbarung vielfach variabel einsetzbar.

## Patentansprüche

1. Verfahren zur Diagnose eines Bussystems (4) mit einer Anzahl von Busteilnehmern (T1 bis Tn), wobei eine portable Diagnoseeinrichtung (6) als ein separater Busteilnehmer (T1 bis Tn) über eine Steckverbindung an einer vorgebbaren Position an das Bussystem (4) angeschlossen wird und mittels einer Protokollanalysefunktion der portablen Diagnoseeinrichtung (6) mindestens ein physikalischer Parameter und ein logischer Parameter überwacht und gegebenenfalls analysiert werden.

2. Verfahren nach Anspruch 1, wobei anhand des physikalischen Parameters ein Leitungsfehler, insbesondere ein Leitungsbruch, ein Kurzschluss einer der Signalleitungen, ein Fehlende des Bussystems (4), ein fehlerhafter Busabschlusswiderstand bestimmt wird.

3. Verfahren nach Anspruch 1 oder 2, wobei anhand des logischen Parameters die Datenübertragung überwacht wird, insbesondere ein Telegrammfehler, ein Datenfehler, ein fehlerhafter Ein- und/oder Ausgang bestimmt wird.

4. Verfahren nach einem der Ansprüche 1 bis 3, wobei der physikalische Parameter und der logische Parameter auf einen Wirkzusammenhang überprüft werden.

5. Verfahren nach einem der Ansprüche 1 bis 4, wobei die portable Diagnoseeinrichtung (6) mindestens einen Diagnoserepeater (12) umfasst, mittels dessen der physikalische Parameter bestimmt wird.

6. Verfahren nach einem der Ansprüche 1 bis 5, wobei die portable Diagnoseeinrichtung (6) mindestens eine zentrale Datenverarbeitungseinheit (14) umfasst, mittels der der logische Parameter bestimmt wird.

7. Verfahren nach Anspruch 6, wobei die zentrale Datenverarbeitungseinheit (14) den oder die Diagnoserepeater (12) parametriert.

8. Verfahren nach einem der Ansprüche 1 bis 7, wobei die portable Diagnoseeinrichtung (6) mit einem Busteilnehmer (T1 bis Tn, T20) verbunden wird.

9. Verfahren nach einem der Ansprüche 1 bis 8, wobei der physikalische Parameter und/oder der logische Parameter in einem Speicher der portablen Diagnoseeinrichtung (6) und/oder in einem Speicher eines anderen Busteilnehmers (T1 bis Tn, T20) und/oder in einem Speicher einer der Diagnoserepeater (12) hinterlegt werden.

10. Verfahren nach einem der Ansprüche 1 bis 9, wobei die portable Diagnoseeinrichtung (6) mit einer separaten Stromversorgung (18) verbunden wird.

11. Vorrichtung zur Diagnose eines Bussystems (4) mit einer Anzahl von Busteilnehmern (T1 bis Tn), wobei eine portable Diagnoseeinrichtung (6) als ein separater Busteilnehmer (T10) über eine Steckverbindung an einer vorgebbaren Position an das Bussystem (4) anschließbar ist und eine Protokollanalysefunktion umfasst, die mindestens einen physikalischen Parameter und einen logischen Parameter des Bussystems (4) überwacht und gegebenenfalls analysiert.

12. Vorrichtung nach Anspruch 11, wobei die portable Diagnoseeinrichtung (6) mindestens einen Diagnoserepeater (12) umfasst, mittels dessen der physikalische Parameter bestimmbar ist.

13. Vorrichtung nach Anspruch 11 oder 12, wobei die portable Diagnoseeinrichtung (6) mindestens eine zentrale Datenverarbeitungseinheit (14) umfasst, mittels der der logische Parameter bestimmbar ist.

14. Vorrichtung nach Anspruch 13, wobei die zentrale Datenverarbeitungseinheit (14) den oder die Diagnoserepeater (12) parametriert.

15. Vorrichtung nach einem der Ansprüche 11 bis 14, wobei die portable Diagnoseeinrichtung (6) über das Bussystem (4) mit einem oder allen anderen Busteilnehmern (T1 bis Tn, T20) verbunden ist.

16. Vorrichtung nach einem der Ansprüche 11 bis 15, wobei der physikalische Parameter und/oder der logische Parameter in einem Speicher der portablen Diagnoseeinrichtung (6) und/oder in einem Speicher eines anderen Busteilnehmers (T1 bis Tn, T20) und/oder in einem Speicher einer der Diagnoserepeater (12) hinterlegbar sind.

17. Vorrichtung nach einem der Ansprüche 11 bis 16, wobei die portable Diagnoseeinrichtung (6) eine separate Stromversorgung (18) aufweist.

18. Vorrichtung nach einem der Ansprüche 11 bis 17, wobei das Bussystem (4) ein Feldbussystem ist.
